# EUROPÄISCHE PATENTSCHRIFT

(11) **EP 0 906 859 B1**
(45) Veröffentlichungstag und Bekanntmachung des Hinweises auf die Patenterteilung: **26.11.2003**
(21) Anmeldenummer: 98116489.0
(22) Anmeldetag: 01.09.1998
(51) Int. Cl.: B60T 13/66

(54) **Bremsanlage für Kraftfahrzeuge**
Braking system for vehicles
Système de freinage pour véhicules

(30) Priorität: 04.10.1997 DE 19743960
(43) Veröffentlichungstag der Anmeldung: 07.04.1999
(73) Patentinhaber: Bayerische Motoren Werke Aktiengesellschaft, 80788 München (DE)
(72) Erfinder: Unterforsthuber, Jakob, 82216 Maisach (DE)

(56) Entgegenhaltungen:
- WO-A-93/24353
- DE-A- 19 615 805
- DE-C- 4 440 290
- DE-U- 9 110 739

## Beschreibung

Die Erfindung bezieht sich auf eine Bremsanlage für Kraftfahrzeuge nach dem Oberbegriff der Patentansprüche 1 und 3.

Eine derartige Bremsanlage ist beispielsweise aus der DE 195 24 939 A1 bekannt. Bei dieser bekannten Bremsanlage wird mittels der elektronisch regelbaren Bremseinheit bei einer Panikbremsung in Gefahrensituationen Bremsdruck über die eigentliche durch die Betätigung des Bremspedals ausgelöste Fahrervorgabe hinaus im Sinne einer Vollbremsung auf die Radbremsen aufgebracht. Zur Erkennung einer Panikbremsung wird dabei der an den Ausgängen des Hauptbremszylinders auftretende Vordruck, der vom Fahrer vorgegeben wird, ausgewertet. Überschreitet die Änderungsrate dieses Vordruckes einen vorgegebenen Schwellwert, wird die Vollbremsung ausgeführt. Ein derartiges Verfahren wird auch als Bremsassistent bezeichnet. Bei dieser bekannten Bremsanlage wird die elektronisch regelbare Bremseinheit unabhängig von der durch den Fahrer über das Bremspedal aufgebrachten Pedalkraft nur dann aktiv, wenn eine Panikbremsung erkannt wird und somit eine Vollbremsung auszuführen ist. Das Verstärkerverhältnis des Bremskraftverstärkers, durch das sich in Abhängigkeit von der durch den Fahrer über das Bremspedal aufgebrachten Pedalkraft ein bestimmter Fahrzeug-Verzögerungsverlauf ergibt, bleibt hierbei unberücksichtigt. Insbesondere ist bei dieser bekannten Bremsanlage keine beliebige Erhöhung des Verzögerungsgradienten bei erhöhter Pedalkraft im absoluten Sinne vorgesehen.

Aus der DE 195 34 728 A1 ist eine spezielle Ausgestaltung eines Bremskraftverstärkers bekannt, durch die ab Erreichen eines vorbestimmten Schwellwertes der Bremspedalkraft eine Erhöhung des Verzögerungsgradienten im Sinne einer Erhöhung des Bremskraftverstärker-Verhältnisses erreicht wird. Diese bekannte Bremskraftverstärkervorrichtung ist zum einen mechanisch aufwendig und zum anderen bezüglich des vorbestimmten Schwellwertes der Bremspedalkraft und der Vorgabe eines erhöhten Verzögerungsgradienten unflexibel.

Es ist Aufgabe der Erfindung, eine Bremsanlage eingangs genannter Art derart zu verbessern, daß auf einfache und flexible Weise eine beliebige Verzögerungserhöhung bei zunehmender Bremspedalkraft möglich ist.

Diese Aufgabe wird durch die kennzeichnenden Merkmale der Patentansprüche 1 und 3 gelöst. Vorteilhafte Weiterbildungen der Erfindung sind die Gegenstände der abhängigen Ansprüche.

Ergänzend wird darauf hingewiesen, daß die elektronisch regelbare Bremseinheit vorzugsweise eine Hydraulikeinheit ist, wie sie beispielsweise auf Seite 212 der Automobiltechnischen Zeitschrift "ATZ", 1997, als Teil des DSC-Systems von BMW dargestellt ist. Vorzugsweise wird die Pedalbetätigungsgröße, die direkt proportional zu der durch den Fahrer über das Bremspedal aufgebrachten Pedalkraft ist, aus dem Vordruck gebildet, der üblicherweise mittels eines am Ausgang des Hauptbremszylinders vorgesehenen Vordrucksensors erfaßt wird. Die Ist-Verzögerung bzw. der Ist-Verzögerungsverlauf kann beispielsweise durch den in den Radbremsen vorherrschenden Bremsdruck, der proportional zur Fahrzeug-Verzögerung ist, oder mittels der in ABS-Systemen üblicherweise ohnehin vorhandenen Raddrehzahlsensoren oder über Längsbeschleunigungssensoren ermittelt werden.

Ergänzend wird darauf hingewiesen, daß der allein durch den Bremskraftverstärker erreichte Verzögerungsverlauf in Abhängigkeit von der über das Bremspedal aufgebrachten Pedalkraft beispielsweise durch zu geringen Unterdruck, durch geringen Belag-Reibwert, durch Anhängerbetrieb und/oder durch hohe Zuladung negativ beeinflußt wird. Die erfindungsgemäße Bremsanlage stellt auch bei Vorliegen dieser negativen Einflußgrößen eine zufriedenstellende Fahrzeugverzögerung für den Fahrer sicher.

In der Zeichnung sind Ausführungsbeispiele der Erfindung dargestellt. Es zeigen
- Fig. 1: mögliche Komponenten der erfindungsgemäßen Bremsanlage,
- Fig.2: Soll-Verzögerungsverläufe mit erhöhtem Verzögerungsgradienten ab Erreichen eines vorbestimmten Schwellwertes der Bremspedalkraft, hervorgerufen durch die Erhöhung des RadBremsdruckes in einem vorgegebenen Verhältnis zum Vordruck, ohne Berücksichtigung der dabei entstehenden Verzögerung und
- Fig. 3: eine Regelung der Verzögerung ab Erreichen eines vorbestimmten Verzögerungs-Schwellwertes mittels der elektronisch regelbaren Bremseinheit entsprechend einer optimalen Verzögerungs-Sollkennlinie.

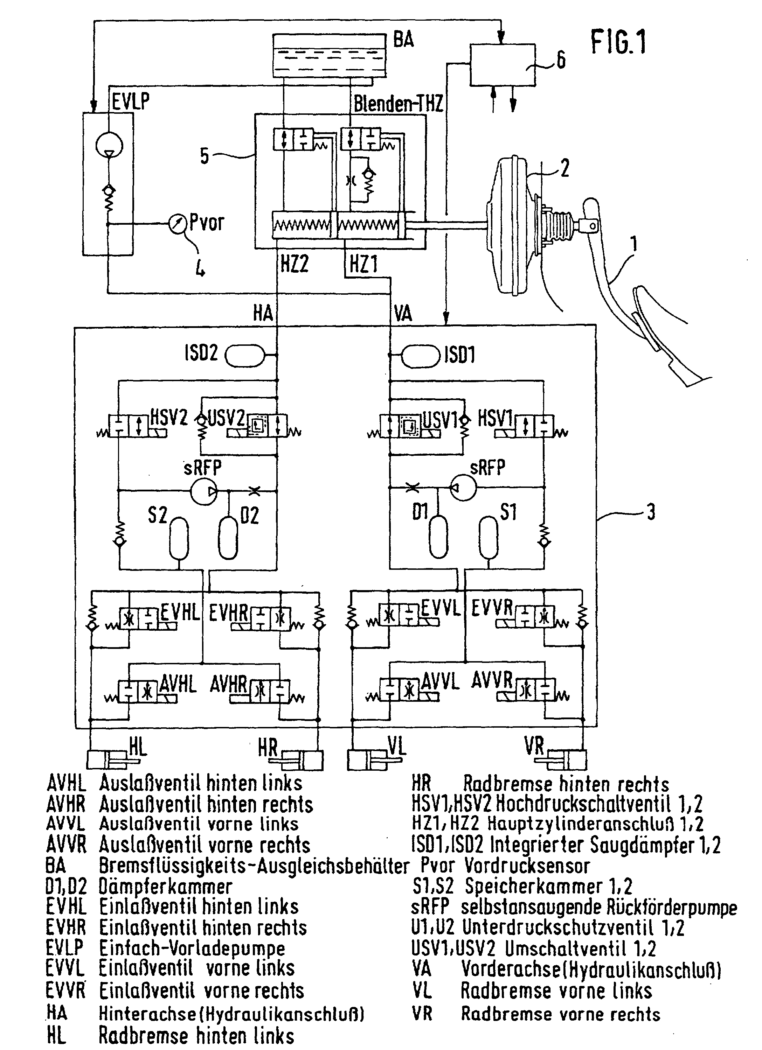

In Fig. 1 ist ein vom Fahrer zu betätigendes Bremspedal 1 mit einem Bremskraftverstärker 2 verbunden. Der Bremskraftverstärker 2 wirkt mit einem Hauptbremszylinder 5 zusammen. Zwischen dem Hauptbremszylinder 5 und den Radbremsen HL, HR, VL und VR ist eine elektronisch regelbare Bremseinheit 3 angeordnet. Die Aktuatoren der elektronisch regelbaren Bremseinheit 3 werden über ein elektronisches Steuergerät 6 angesteuert. Weiterhin erfaßt das Steuergerät 6 den am Ausgang des Hauptbremszylinders 5 herrschenden Vordruck (Pvor) mittels des Vordrucksensors 4. Darüber hinaus weist das Steuergerät 6 weitere Ein- und Ausgänge für Ein- und Ausgangssignale auf. Insbesondere erfaßt das Steuergerät 6 Signale, beispielsweise die Bremsdruckwerte in den Radbremsen oder die Raddrehzahlen, durch die zumindest indirekt die Fahrzeug-Ist-Verzögerung (-a) ermittelbar ist.

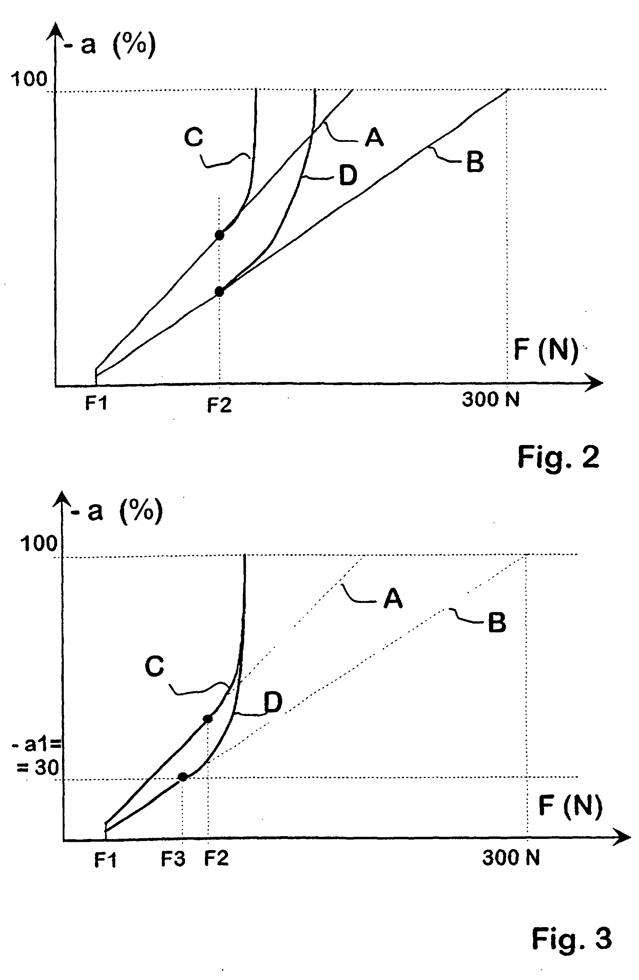

In den Fig. 2 und 3 ist die Verzögerung -a in % (0 - 100 %) über der Pedalbetätigungsgröße F (N) (z. B. 0 - 300 N) aufgetragen. Die Pedalbetätigungsgröße F entspricht hierbei vorzugsweise der durch den Fahrer über das Bremspedal aufgebrachten Pedalkraft, die aus dem Vordruck gebildet wird, der mittels des Vordrucksensors 4 am Ausgang des Hauptbremszylinders 5 gemessen wird. Im folgenden wird für die Pedalbetätigungsgröße F der Begriff "Pedalkraft" F verwendet.

Im Ausführungsbeispiel nach Fig. 2 wird im elektronischen Steuergerät 6 (Fig. 1) allein der durch den Bremskraftverstärker 2 erreichte Pedalkraftverlauf berücksichtigt. In Fig. 2 sind als Beispiele für die sich daraus ergebenden Verzögerungen der Verzögerungsverlauf A für den günstigsten Fall und der Verzögerungsverlauf B für den ungünstigsten Fall dargestellt. Der günstigste Fall tritt insbesondere bei hohem Unterdruck, bei unbeladenem Fahrzeug, bei hohem Belag-Reibwert und ohne Hängerbetrieb auf. Der ungünstigste Fall liegt insbesondere bei niedrigem Unterdruck, bei voll beladenem Fahrzeug, bei niedrigem Belag-Reibwert oder mit Hängerbetrieb vor. Die Verzögerungsverläufe A und B mit durchgehend gleichbleibenden Verzögerungsgradienten würden sich durch den Bremskraftverstärker nach dem Stand der Technik ohne die erfindungsgemäße Bremsanlage einstellen. Erfindungsgemäß wird jedoch im Steuergerät 6 die Pedalkraft F erfaßt. Mittels des Steuergeräts 6 und der elektronisch regelbaren Bremseinheit wird ab Erreichen des vorbestimmten Schwellwertes F2 der Pedalkraft F der Bremsdruck in den Radbremsen HL, HR, VL und VR derart erzeugt, daß sich bei einem weiteren Ansteigen der Pedalkraft F über den Schwellwert F2 hinaus erhöhte Verzögerungsgradienten im Sinne einer Erhöhung des Bremskraftverstärker-Verhältnisses entsprechend den Verzögerungsverläufen C und D gegenüber den Verzögerungsverläufen A und B ergeben. Die "Soll-Verzögerungsverläufe" mit erhöhtem Verzögerungsgradienten ab Erreichen eines vorbestimmten Schwellwertes der Bremspedalkraft werden vorzugsweise durch die Erhöhung des Rad-Bremsdruckes in einem vorgegebenen Verhältnis zum Vordruck, hier in Form eines nicht-linearen Verstärkungsfaktors, ohne zwangsweise Berücksichtigung der dabei entstehenden Verzögerungen hervorgerufen. Der Verstärkungsfaktor kann im Sinne einer Steuerung im Gegensatz zu einer Regelung für alle Verzögerungsverläufe C bis D gleich sein.

Ergänzend wird darauf hingewiesen, daß bekanntermaßen der Bremskraftverstärker erst ab Erreichen einer bestimmten Ansprech-Pedalkraft F1 wirksam wird. Zwischen der Ansprech-Pedalkraft F1 und dem Pedalkraft-Schwellwert F2 können sich auch Verzögerungsverläufe zwischen den Kurven A und B ergeben.

Abhängig von dem allein durch den Bremskraftverstärker 2 erreichten Verzögerungsverlauf (z. B. A oder B) können auch unterschiedliche Pedalkraft-Schwellwerte F2 definiert werden (in Fig. 2 nicht dargestellt).

Entsprechend Fig. 2 steigen die erhöhten Verzögerungsgradienten nach den Verzögerungsverläufen C und D mit dem weiteren Ansteigen der Pedalkraft F über den Pedalkraft-Schwellwert F2 hinaus kontinuierlich weiter an. Hierdurch wird ein "weicher" Übergang von dem zunächst linearen Bremskraftverstärker-Verhältnis zu dem simulierten erhöhten Bremskraftverstärker-Verhältnis erreicht.

Fig. 3 zeigt eine Alternative zu dem in Fig. 2 dargestellten Ausführungsbeispiel. In Fig. 3 ist eine Verzögerungs-Sollkennlinie C dargestellt, die vorzugsweise für den günstigsten Fall empirisch ermittelt und im Steuergerät 6 abgespeichert ist. Auch kann die Verzögerungs-Sollkennlinie C, wie in Fig. 3 dargestellt, ab Erreichen eines vorbestimmten Pedalkraft-Schwellwertes F2 mit dem weiteren Ansteigen der Pedalkraft F einen kontinuierlich weiter ansteigenden erhöhten Verzögerungsgradienten aufweisen. Ein kontinuierlich weiter ansteigender erhöhter Verzögerungsgradient ist jedoch nicht zwingend erforderlich.

Im elektronischen Steuergerät 6 wird zunächst bis zum Erreichen eines vorbestimmten Verzögerungs-Schwellwertes -a1, z. B. 30 %, der allein durch den Bremskraftverstärker 2 erreichte Ist-Verzögerungsverlauf, im Beispiel nach Fig. 3 entsprechend dem Verzögerungsverlauf B, erfaßt. Bei Erreichen des vorbestimmten Verzögerungs-Schwellwertes -a1 wird die zu diesem Zeitpunkt vorliegende Ist-Pedalkraft F3 festgestellt. Die Ist-Verzögerung für die Pedalkraft F3, die dem vorbestimmten Verzögerungs-Schwellwert -a1 entspricht, wird mit der Soll-Verzögerung, die entsprechend der Verzögerungs-Sollkennlinie C für diese Pedalkraft F3 vorgegeben ist, verglichen. Ist die Ist-Verzögerung kleiner als die Soll-Verzögerung für die Pedalkraft F3, wie in Fig. 3 dargestellt, wird mittels der elektronisch regelbaren Bremseinheit 3 der Bremsdruck in den Radbremsen im Sinne einer Regelung derart erzeugt, daß sich der Soll-Verzögerungsverlauf entsprechend der Verzögerungs-Sollkennlinie C ergibt; d. h. dem Soll-Verzögerungsverlauf C wird erst ab Erreichen eines vorbestimmten Verzögerungs-Schwellwertes -a1, hier z. B. 30 %, gefolgt. Alternativ kann dem Soll-Verzögerungsverlauf C auch erst ab Erreichen eines vorbestimmten Schwellwertes der Pedalkraft F, z. B. des Schwellwertes F2, gefolgt werden (hier nicht dargestellt). Erfindungsgemäß kann dem Soll-Verzögerungsverlauf C auch ständig gefolgt werden; d. h., ohne das Erreichen eines vorbestimmten Verzögerungs-Schwellwertes -a1 oder eines vorbestimmten Schwellwertes F2 der Pedalkraft F abzuwarten. Dies kann jedoch zu einer fast permanenten Regelung der Bremseinheit und damit zu einer Überforderung führen. Aus diesen Gründen ist es vorteilhafter, das Erreichen vorbestimmter Schwellwerte abzuwarten, bevor entsprechend der Verzögerungs-Sollkennlinie C geregelt wird.

Darüber hinaus wird vorzugsweise, wie in Fig. 3 dargestellt, der Ist-Verzögerungsverlauf entsprechend einer stetig differenzierbaren Kurve D, z. B. mit Hilfe der Definition eines Verstärkungsfaktors, an den Soll-Verzögerungsverlauf C angepaßt, um durch einen weichen Übergang den Komfort der Bremsanlage zu erhöhen.

Somit sind durch die erfindungsgemäße Bremsanlage alle Vorteile erreicht, die man durch einen Bremskraftverstärker mit beliebig einstellbaren Verstärkungsverhältnis erreichen würde, ohne bereits bekannte Bremsanlagen mechanisch verändern zu müssen.

## Patentansprüche

1. Bremsanlage für Kraftfahrzeuge mit einem Bremspedal (1), mit einem Bremskraftverstärker (2), mit einem Hauptbremszylinder (5) und mit einer elektronisch regelbaren Bremseinheit (3), die zwischen dem Hauptbremszylinder (5) und den Radbremsen (HL, HR, VL, VR) angeordnet ist und durch die mittels eines elektronischen Steuergeräts (6) der Bremsdruck in den Radbremsen unabhängig von dem am Ausgang des Hauptbremszylinders (5) herrschenden Vordruck einstellbar ist, **dadurch gekennzeichnet, daß** im elektronischen Steuergerät (6) der durch den Bremskraftverstärker (2) erreichte Verlauf einer Pedalbetätigungsgröße (F), die direkt proportional zu der durch den Fahrer über das Bremspedal (1 ) aufgebrachten Pedalkraft ist, erfaßt wird, und daß ab Erreichen eines vorbestimmten Schwellwertes (F2) der Pedalbetätigungsgröße mittels der elektronisch regelbaren Bremseinheit (3) der Bremsdruck in den Radbremsen (HL, HR, VL, VR) derart erzeugt wird, daß sich im Verzögerungsverlauf (C; D) ein erhöhter Verzögerungsgradient bei einem weiteren Ansteigen der Pedalbetätigungsgröße im Sinne einer Erhöhung des Bremskraftverstärker-Verhältnisses ergibt.

2. Bremsanlage nach Patentanspruch 1, **dadurch gekennzeichnet, daß** der erhöhte Verzögerungsgradient mit dem weiteren Ansteigen der Pedalbetätigungsgröße (F) kontinuierlich weiter ansteigt.

3. Bremsanlage für Kraftfahrzeuge mit einem Bremspedal (1), mit einem Bremskraftverstärker (2), mit einem Hauptbremszylinder (5) und mit einer elektronisch regelbaren Bremseinheit (3), die zwischen dem Hauptbremszylinder (5) und den Radbremsen (HL, HR, VL, VR) angeordnet ist und durch die mittels eines elektronischen Steuergeräts (6) der Bremsdruck in den Radbremsen unabhängig von dem am Ausgang des Hauptbremszylinders herrschenden Vordruck einstellbar ist, insbesondere nach Patentanspruch 1, **dadurch gekennzeichnet, daß** im elektronischen Steuergerät (6) der durch den Bremskraftverstärker (2) erreichte Verzögerungsverlauf (B) in Abhängigkeit von einer Pedalbetätigungsgröße (F), die direkt proportional zu der durch den Fahrer über das Bremspedal (1) aufgebrachten Pedalkraft ist, erfaßt wird, und daß mittels der elektronisch regelbaren Bremseinheit (3) der Bremsdruck in den Radbremsen derart erzeugt wird, daß sich ein Soll-Verzögerungsverlauf entsprechend einer im Steuergerät abgespeicherten Verzögerungs-Sollkennlinie (C) ergibt, wenn der Ist-Verzögerungsverlauf (B), vorzugsweise innerhalb eines vorgegebenen Toleranzbandes, vom Soll-Verzögerungsverlauf (C) abweicht.

4. Bremsanlage nach Patentanspruch 3, **dadurch gekennzeichnet, daß** dem Soll-Verzögerungsverlauf (C) erst ab Erreichen eines vorbestimmten Verzögerungs-Schwellwertes (-a1) und/oder ab Erreichen eines vorbestimmten Schwellwertes (F2) der Pedalbetätigungsgröße (F) gefolgt wird.

5. Bremsanlage nach Patentanspruch 3 oder 4, **dadurch gekennzeichnet, daß** ab Erreichen eines vorbestimmten Schwellwertes (F2) der Pedalbetätigungsgröße der Verzögerungsgradient der Verzögerungs-Sollkennlinie (C) kontinuierlich ansteigt.

6. Bremsanlage nach Patentanspruch 3, 4 oder 5, **dadurch gekennzeichnet, daß** der Ist-Verzögerungsverlauf (B, D) stetig differenzierbar an den Soll-Verzögerungsverlauf (C) angepaßt wird.

7. Bremsanlage nach einem der Patentansprüche 1 bis 6, **dadurch gekennzeichnet, daß** die Pedalbetätigungsgröße (F) aus dem am Ausgang des Hauptbremszylinders (5) gemessenen Vordruck (Pvor) gebildet wird.

## Claims

1. A braking system for motor vehicles with a brake pedal (1 ), with a brake servo (2), with a master brake cylinder (5) and with an electronically controlled brake unit (3), which is arranged between the master brake cylinder (5) and the wheel brakes (HL, HR, VL, VR) and through which the brake pressure in the wheel brakes can be adjusted by means of an electronic control unit (6) independently of the initial pressure acting at the output of the master brake cylinder (5), **characterised in that** the curve of the pedal actuating value (F) obtained by the brake servo (2) which is directly proportional to the pedal force exerted by the driver on the brake pedal (1), is detected by the electronic control unit (6) , and that after reaching a predetermined threshold value (F2) of the pedal actuating value the brake pressure in the wheel brakes (HL, HR, VL, VR) is generated by means of the electronically controlled brake unit (3) such that an increased braking gradient results in the deceleration curve (C; D) for a further rise in the pedal operating value in the direction of an increase in the brake servo ratio.

2. A braking system according to Claim 1, **characterised in that** the increased braking gradient rises continuously with a further increase of pedal operating force (F).

3. A braking system for motor vehicles with a brake pedal (1), with a brake servo (2), with a master brake cylinder (5) and with an electronically controlled brake unit (3), which is arranged between the master brake cylinder (5) and the wheel brakes (HL, HR, VL, VR) and through which the brake pressure in the wheel brakes can be adjusted, independently of the initial pressure acting at the output of the master brake cylinder, especially in accordance with Claim 1, **characterised in that** the curve of the retardation (B) obtained by the brake servo (2) depending on the pedal actuating value (F) which is directly proportional to the pedal force exerted by the driver on the brake pedal (1), is detected by the electronic control unit (6) and that by means of the electronically controlled brake unit (3), the brake pressure in the wheel brakes is generated such that a target retardation curve, corresponding to a target characteristic retardation curve (C) stored in the control unit results, when the actual retardation curve (B), preferably within a predetermined tolerance band, deviates from the target retardation curve (C).

4. A braking system according to Claim 3, **characterised in that** the target retardation curve (C) is only followed after a predetermined retardation threshold (-a1) has been reached and/or from the reaching of a predetermined threshold value of the pedal operating force (F).

5. A braking system according to Claim 3 or Claim 4, **characterised in that** after the reaching of a predetermined threshold value (F2) of the pedal operating force the retardation gradient of the retardation characteristic curve (C) rises continuously.

6. A braking system according to Claim 3, 4 or 5, **characterised in that** the actual retardation curve (B, D) is matched to the target retardation curve in a constantly differentiable manner.

7. A braking system according to any of the claims 1 to 6, **characterised in that** the pedal actuating value (F) is formed from the initial pressure (Pvor) measured at the output of the master brake cylinder (5).

## Revendications

1. Système de freinage pour véhicules doté d'une pédale de frein (1), d'un servofrein (2), d'un maître-cylindre de frein (5) et d'une unité de freinage (3) réglable électroniquement, disposé entre le maître-cylindre de frein (5) et les freins de roue (HL, HR, VL, VR) et grâce auquel la pression de freinage est réglable dans les freins de roue au moyen d'une unité de commande (6) électronique, indépendamment de la pression d'admission régnant à la sortie du maître-cylindre de frein (5),
**caractérisé en ce que**
- l'allure d'une valeur d'actionnement de la pédale (F), obtenue par le servofrein (2), directement proportionnelle à la force de pédale appliquée par le conducteur par l'intermédiaire de la pédale de frein (1), est saisie dans l'unité de commande électronique (6), et
- dès qu'une valeur seuil (F2) prédéfinie de la valeur d'actionnement de la pédale est atteinte, la pression de freinage dans les freins de roue (HL, HR, VL, VR) est produite au moyen de l'unité de freinage (3) réglable électroniquement de telle sorte qu'on obtient un gradient de décélération élevé dans l'allure de décélération (C, D) lorsque la valeur d'actionnement de la pédale monte encore dans le sens d'une augmentation du rapport du servofrein.

2. Système de freinage selon la revendication 1,
**caractérisé en ce que**
le gradient de décélération élevé continue à croître de manière continue avec l'augmentation de la valeur d'actionnement de la pédale (F).

3. Système de freinage pour véhicules doté d'une pédale de frein (1), d'un servofrein (2), d'un maître-cylindre de frein (5) et d'une unité de freinage (3) réglable électroniquement, disposé entre le maître-cylindre de frein (5) et les freins de roue (HL, HR, VL, VR) et grâce auquel la pression de freinage est réglable dans les freins de roue au moyen d'une unité de commande (6) électronique, indépendamment de la pression d'admission régnant à la sortie du maître-cylindre de frein (5), notamment selon la revendication 1,
**caractérisé en ce que**
- l'allure de décélération (B) obtenue par le servofrein (2) en fonction d'une valeur d'actionnement de la pédale (F), directement proportionnelle à la force de pédale appliquée par le conducteur par l'intermédiaire de la pédale de frein (1), est saisie dans l'unité de commande électronique (6), et
- la pression de freinage dans les freins de roue est créée au moyen de l'unité de freinage (3) réglable électroniquement de telle sorte qu'on obtient une allure théorique de décélération correspondant à une ligne caractéristique théorique de décélération (C) mémorisée dans l'unité de commande électronique (6) lorsque l'allure réelle de décélération (B) dévie de l'allure théorique de décélération (C), de préférence à l'intérieur d'une bande de tolérance prédéfinie.

4. Système de freinage selon la revendication 3,
**caractérisé en ce que**
l'on suit d'abord l'allure théorique de décélération (C) lorsqu'une valeur seuil (-al) prédéfinie de décélération est atteinte et/ou lorsqu'une valeur seuil (F2) prédéfinie de la valeur d'actionnement de la pédale (F) est atteinte.

5. Système de freinage selon l'une quelconque des revendications 3 ou 4,
**caractérisé en ce que**
le gradient de décélération de la ligne caractéristique théorique de décélération (C) croît de manière continue dès qu'une valeur seuil (F2) prédéfinie de la valeur d'actionnement de la pédale est atteinte.

6. Système de freinage selon l'une quelconque des revendications 3, 4 ou 5,
**caractérisé en ce que**
l'allure réelle de décélération (B, D) est adaptée constamment de manière différenciable à l'allure théorique de décélération (C).

7. Système de freinage selon l'une quelconque des revendications 1 à 6,
**caractérisé en ce que**
la valeur d'actionnement de la pédale (F) est formée à partir de la pression d'admission (Pvor) mesurée à la sortie du maître-cylindre de frein (5).
